# EUROPEAN PATENT SPECIFICATION

(11) **EP 4 050 505 B1**
(45) Date of publication and mention of the grant of the patent: **08.04.2026**
(21) Application number: 22158871.8
(22) Date of filing: 25.02.2022
(51) Int. Cl.: G06F 21/31, G06N 3/04, G06N 3/08, G06N 3/044

(54) **METHODS, ENTITIES, COMPUTER PROGRAMS AND SYSTEMS FOR TRAINING TO ASSIGN USER IDENTIFIERS AND TO ASSIGN USER IDENTIFIERS IN THE CONSUMPTION OF AUDIOVISUAL CONTENT**
VERFAHREN, ENTITÄTEN, COMPUTERPROGRAMME UND SYSTEME ZUM TRAINIEREN DER ZUWEISUNG VON BENUTZERKENNUNGEN UND ZUR ZUWEISUNG VON BENUTZERKENNUNGEN BEIM KONSUM VON AUDIOVISUELLEN INHALTEN
PROCÉDÉS, ENTITÉS, PROGRAMMES INFORMATIQUES ET DES ENTITÉS D'APPRENTISSAGE POUR ATTRIBUER DES IDENTIFICATEURS D'UTILISATEUR ET PROCÉDÉ POUR ATTRIBUER DES IDENTIFICATEURS UTILISATEURS DANS LA CONSOMMATION DE CONTENU AUDIOVISUEL

(30) Priority: 25.02.2021 IT 202100004418
(43) Date of publication of application: 31.08.2022
(73) Proprietor: Sky Italia S.r.L., 20138 Milano (IT)
(72) Inventor: Gaglione, Ciro, 20138 Milano (IT); Troiano, Luigi, 20138 Milano (IT)
(74) Representative: Hoffmann Eitle

(56) References cited:
- US-A1- 2007 011 039
- US-A1- 2010 293 165
- US-A1- 2019 349 619

## Description

### BACKGROUND OF THE INVENTION

For the purpose of accessing certain online services, a user authentication is usually necessary; this typically requires the entry of a user identifier (user id) and a password. In the case, for example, of television services, one usually relies on the use of a smart card which allows the identification of a subscription, but not necessarily a user, as the service enabled by the smart card could be enjoyed by various users associated with the subscription. User authentication or identification may become necessary and useful, however, in view of other requirements, such as, for example, optimisation of service provision in the event of technical limitations on the user side (for example in view of the type of user device available, screen resolution for television services, etc.). User authentication as known in the art, however, is not simple to achieve and in some cases not even possible.

US2007011039 is directed to generating audience analytics that includes providing a database containing a plurality of user input pattern profiles representing the group of users of terminal device, in which each user of the group is associated with one of the plurality of user input pattern profiles. A clickstream algorithm, tracking algorithm, neural network, Bayes classifier algorithm, or affinity-day part algorithm can be used to generate the user input pattern profiles. A user input pattern is detected based upon use of the terminal device by the current user and the user input pattern of the current user is dynamically matched with one of the user input pattern profiles contained in the database. The current user is identified based upon matching of the user input pattern generated by the current user with one of the user input pattern profiles. Further, the document suggests processing each user input pattern profile to identify a demographic type. A plurality of biometric behavior models are employed to identify a unique demographic type. Each user input pattern profile is compared against the plurality of biometric behavior models to match each user input pattern profile with one of the biometric behavior models such that each user input pattern profile is correlated with one demographic type. Audience analytics are then based upon the
identified demographic types.

US2019349619 discloses systems and methods for identifying, assembling, and transmitting content in the context of electronic program guides and program channels. Data is received over a network from a first user terminal that enables identification of the first user. Program information for a digital program is accessed. A determination is made as to how many interstitials are to be presented during a playback of the digital program. A prediction model is selected and executed to generate predictions of user responses to one or more placements of program interstitials. The user response predictions are used to determine positioning of interstitials with respect to the program. The interstitials are enabled to be displayed on the first user terminal in accordance with the determined positioning. US2010293165 presents a subscriber identification system in which subscriber selection data including channel changes, volume changes, and time-of-day viewing information is used to identify a subscriber (user) from a group of subscribers. In one instance, the subscriber selection data is recorded and a signal processing algorithm such as a Fourier transform is used to produce a processed version of the subscriber selection data. The processed version of the subscriber selection data can be correlated with stored common identifiers of subscriber profiles to determine which subscriber from the group is presently viewing the programming. A neural network or fuzzy logic can be used as the mechanism for identifying the subscriber from clusters of information which are associated with individual subscribers.

### SUMMARY OF THE INVENTION

One of the objects of the present invention lies in improving the known solutions or remedying one or more of the problems present in the known solutions. The object is achieved by the independent claims. Advantageous embodiments are defined by the dependent claims.

### LIST OF FIGURES

Figure 1 illustrates devices for reproducing audiovisual content whose use may be shared by respective groups of users;
Figure 2 illustrates a flow diagram of a method for training a neural network according to one embodiment of the present invention;
Figure 3 shows a diagram which illustrates the units of content available on linear channels and/or in on-demand catalogues, and illustrates examples of sequences of elements;
Figure 4 illustrates a flow diagram of a method for assigning user identifiers according to one embodiment of the present invention;
Figure 5A illustrates a block diagram of an entity for training a neural network according to one embodiment of the present invention;
Figure 5B illustrates a block diagram of an entity for assigning user identifiers according to one embodiment of the present invention;
Figure 6 illustrates block diagrams of systems according to embodiments;
Figure 7 illustrates a block diagram of a computer adapted to execute a program according to one embodiment;
Figure 8 shows a block diagram illustrating an example of what is described in the present disclosure;
Figure 9 shows a block diagram of a neural network to which what is described in the present disclosure may be applied;
Figure 10 illustrates an example of how input data can be supplied to an entity for learning and respectively to a neural network trained to assign user identifiers;
Figure 11 illustrates the results of tests carried out.

### DETAILED DESCRIPTION

As mentioned earlier, in the prior art there exist user authentication mechanisms that rely on a smart card inserted in an STB (set-top box), such as, for example, in the case of television services, or by means of a login with a username/password in the case of web products and services. At the same time, there does not exist any user authentication in the case of the free-to-air television (FTA; free meaning that there is no charge for the service), though this would be desirable as it would make it possible to create customised features for a certain user.

In any event, the known solutions have limits, as is recognised by the inventors. For example:
- a customer account may refer to or be associated with several users. This is very commonly the case with subscriptions providing access to different members of a family; in such a case, an association between a customer account and a smart card does not make it possible to distinguish, and thus identify, an individual user who is using a service within the household;
- Identification by means of login/username authentication does not lend itself to use from a television set and is in fact limited to web services. In fact, user identification is limited by the narrow capabilities of the input device typically used to control television sets or apparatus for displaying audiovisual content: in the case of a remote control, for example, the selection or identification of a user is not generally possible, or is at least difficult to obtain, since it would significantly limit the usability of the apparatus and/or service;
- user authentication is not required for services such as terrestrial television or in general for free-to-air television, although - if it were possible to introduce it in a simple manner - one could achieve specific customisation for the user, such as, for example, a screen colour setting for the identified user, or a selection of certain broadcast and/or display formats.

In general, therefore, authentication methods require an active declaration by the user of their identity or identifier. However, this is not always convenient or simple to do, and in some situations it does not allow the user who is actually using the service to be identified.

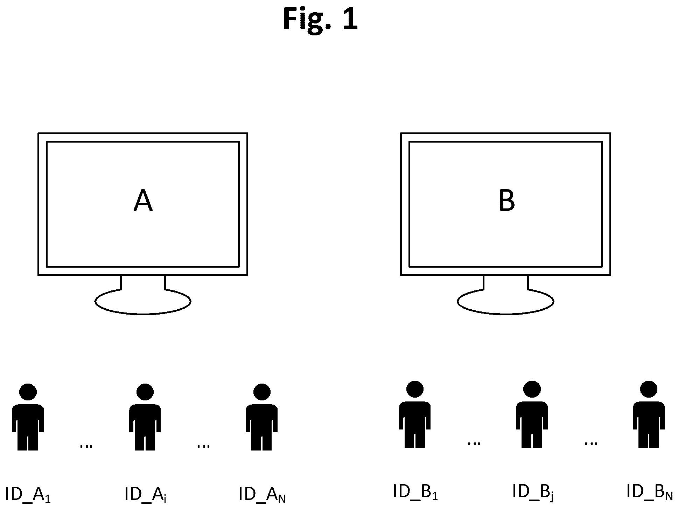

In order to facilitate comprehension of what is described further below, reference will now be made to figure 1, which illustrates a device for reproducing audiovisual content (indicated as A in the figure), for example a television set, a radio (in the case of audio content), a tablet or computer shared by a number of people, etc. The device A can be used by any of the users A₁, A₂, ..., Aᵢ, ..., A_{N}; these users represent a group of users associated with the device A, whose use can therefore be shared by the users of the group. Sharing use means that each user of the group has access to use of the device on their own or together with one or more other users of the group. For the sake of simplicity, it is assumed that a single user controls the reproduction status of the device at a certain time instant or in a certain time interval. Examples of how to take into account different methods of sharing use of the reproduction device will also be discussed further below. Figure 1 also illustrates a second reproduction device B with respective users B₁, B₂, ..., Bᵢ, ..., B_{N}, wherein A_{N} and B_{N} can be the same or different. What has been described for the device A and the corresponding group of users also applies for the device B and the respective group independently of the device A and group A; in fact, it is possible to ignore the device B/group B, which are illustrated solely by way of example. Each of the devices A can be represented by a television set, tablet, STB, etc., and in general represents a or in general represents a device for receiving, and preferably also displaying content belonging to linear channels and/or content provided by an on-demand service provider.

With reference to a device for reproducing audiovisual content which can be shared by a plurality of users (for example, device A with A_{N} users as in figure 1), the inventors suggest identifying the user (at least within that plurality of users) by analysing the user's navigation through the audiovisual content offered on the reproduction device. The solution is based on the recognition, as verified through laboratory tests, that every user has a unique and/or own and/or individual method (at least within the plurality of users) of moving within the offerings of content that may be enjoyed by means of a reproduction device. In other words, in the presence of a group of users having a finite number of users who share use of a reproduction device, one user of the group can be identified in a substantially unique manner by observing how (the mode in which) that user consumes the content by means of that reproduction device within a time interval.

This mode represents a sort of individual footprint which enables a user to be identified with a high level of accuracy, above all when this user is included within a group containing a finite and preferably known number of people; known does not necessarily mean that the actual identity of one or more users of the group needs to be known; as is also evident from what follows, known user means that an identifier has been assigned to a user of the group, preferably in a training step. Once training has been completed, identification of a user can be obtained through the trained neural network, which is capable of considering information about the reproduction of content on the reproduction device, such as, for example, the channel hopping sequence and/or the time spent on channels and/or the time spent on an item of content/programme. As illustrated further below, laboratory tests have confirmed that the solution described herein reaches a high degree of reliability in an objective manner, in particular in a manner that is substantially independent of subjective factors such as a user's preference for certain channels and/or programmes.

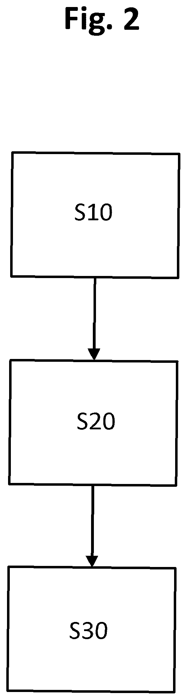

With reference to figure 2, a first embodiment will now be illustrated, relating to a method for training a neural network to assign an identifier to a user, wherein the user is comprised in a group (comprising or having a finite number) of users who share use of a device for reproducing audiovisual content; the device A and group of users A₁ ... A_{N} in figure 1 are an illustrative example thereof. As mentioned earlier, it is sufficient that the identifier allows the user to be distinguished from other users of the group and, therefore, it need not necessarily be (but can preferably be) a global and/or unique identifier. As mentioned earlier, the sharing of use of the reproduction device can take place at different times (a user uses the device individually, hence in different time instants or intervals from the ones in which the same device is used by another user) or at the same time (i.e. two or more users use the device in the same time instant or time interval). The audiovisual content, e.g. the programmes broadcast on a television (or radio) channel, can be broadcast by satellite, via a terrestrial system or over the Internet (via streaming, OTT, etc.).

The method comprises a step S10 of acquiring, for at least one user Aᵢ belonging to the group, a sequence of elements of information about use of the reproduction device, or also, in short, a sequence of information about use. Each element of the sequence comprises temporal information and reproduction information. The temporal information indicates a time interval, preferably predefined (not necessarily constant; it can in fact be dynamically modified and/or variable as long as the length of time is known or determinable); the time interval is preferably comprised in a set of successive time intervals, or, in other words, the temporal information indicates a sampling time reference for the reproduction information; in this manner, as explained further below, a sequence of values can be obtained, for example a sequence of pairs of values, wherein each pair indicates an item of content being reproduced and a time reference corresponding to the time instant or time interval in which the content information is sampled. In this manner, a sequence of values is continuously sampled over time (in the sense that the sampling continues without having to be limited to a number of samples or time instants) so that the time instant (or period of time) in which the reproduction information was sampled is known. By virtue also of this particular choice of the sequence obtained, it is therefore possible to use a recurrent network (as explained further below), hence the solution proposed by the inventors makes it possible to obtain an identifier of a user in an accurate and simple manner. The reproduction information provides an indication of the reproduction status of the device (A) while it is being used by a user (Ai) and it (the reproduction information) refers to a respective time interval (in the sense that there is an association between reproduction information and respective temporal information). The reproduction information preferably comprises a (i) content indicator indicating that (mainly, as illustrated further below) a unit of audiovisual content is reproduced by the device within the respective time interval. The reproduction information can preferably comprise (ii) a content change indicator indicating a status of change of the audiovisual content being reproduced (or also, in short, a zapping status) for the same time interval. In other words, the reproduction information indicates whether the device is reproducing (mainly) a single item of audiovisual content within the corresponding time interval, and/or, preferably, whether a channel change operation (zapping) instead takes place during the same time interval; if the reproduction information indicates a zapping status, it can optionally also comprise the identifiers of content reproduced during the channel change operation. The content indicator preferably identifies a unit of content that is reproduced in the time interval in question; therefore, the content indicator comprises a content identifier. It is noted that said identifier need not be absolutely unique. It is in fact sufficient that the content identifier identifies a unit of content as a unit relating at least to a single time interval (i.e. it uniquely identifies the unit within the time interval) and preferably relating to a time interval and to the time intervals immediately before and after it (i.e. it uniquely identifies the unit within a certain time interval, the interval immediately before it and the interval immediately after it). Again preferably, the content identifier uniquely identifies the unit of content relating to a preceding unit of content and/or a subsequent unit of content on the same channel or again preferably on a plurality of channels. The content indicator and/or content identifier is agnostic with respect to the audiovisual content or type of audiovisual content, for example it is agnostic with respect to the descriptive semantics of the audiovisual content and/or cognitive aspects tied to the information represented by the audiovisual content and/or the type of programme viewed and/or the title (or description) of the programme viewed, etc. Therefore, the sequence obtained (see for example the sequence {Ti, Ci} is agnostic with respect to the type of audiovisual content, i.e. it is determined without having knowledge of the type of audiovisual content and/or it does not reflect knowledge of the type of audiovisual content. In still other words, agnostic means that the cognitive aspect of the audiovisual content is not taken into consideration when determining the sequence or the content identifier. The indicator or identifier of audiovisual content is preferably associated with or derived from metadata associated with the audiovisual content. As mentioned, the information about the reproduction of content can comprise (i) a content indicator and/or a content change indicator. The content change indicator is represented in a one-bit example, for example 1 indicating zapping and 0 indicating non-zapping (the opposite is possible, and other representations with several bits are possible). The content indicator can indicate an identifier of the content, and can be omitted if, for example, there is also a status indicator which indicates that no change of content has occurred with respect to the previous time interval. Therefore, it is not necessary to include both indicators, which can also be combined together in a single field. Furthermore, the content change indicator can be implicit, derivable from the observation of how the content changes between two or more successive time intervals.

As mentioned, the content change indicator is optional and can be omitted, since it has been found that the solution also works when the zapping status is ignored (for example when it is decided in any case to associate a time interval with content on the basis of a rule, also according to some described examples). By taking into consideration the zapping status as well, it is possible to further increase the precision with which the user identifier is assigned. If the reproduction information comprises both a content indicator and a content change indicator, a distinction is made, within a respective time interval, between a change of channel (zapping) and reproduction of an item of content, thus increasing the accuracy of the solution.

In step S20 a data set is generated which comprises the acquired sequence of elements relating to a user and an identifier of said user. In one example, the data set thus generated represents a dataset to be used for training the neural network. The user identifier can be randomly determined for the user and/or can be determined by the user and/or by another user. For example, before, during or after having acquired a sequence of elements relating to the use of the reproduction device (A) by a user (Aᵢ), a user identifier is determined for that user, and that user identifier is assigned to or associated with the generated data sequence.

In step S30, the neural network is trained on the basis of the data set generated in step S20. As mentioned above, the sequence of information about use of the device represents a footprint of the user, in a surprisingly accurate and objective manner, as it independent of subjective aspects and/or subjective preferences of the user. The neural network is thus trained on the basis of a data set comprising a sequence acquired for that user and a user identifier; the neural network, once trained, is capable of recognising that user. As explained further below, the solution shows to be suitable also for identifying users other than the user or users with which the network was trained, and can also be adapted to a viewing mode in which, for example, several users make use of the same reproduction device at the same time.

In the method of the present embodiment, the status of change of the audiovisual content being reproduced preferably comprises, in the case of reproduction of linear channels by means of the reproduction device, a channel change status, indicating that the reproduction has changed from an initial channel being reproduced at the start of the time interval to one or more other channels reproduced after the initial channel; at least one of the one or more other subsequent channels are different from the initial channel (for example, the following channel change sequences are possible: ch1, ch2; ch1, ch2, ch3; ch1, ch2, ch3; etc.). Again preferably, in the case of linear channels, the status of change of the audiovisual content being reproduced (or zapping, in short) comprises a change among at least three items of content for two different channels. In one example, a zapping status is determined if, within a time interval, a sequence of three or more items of audiovisual content is detected (in which one is different from the subsequent and preceding one) and/or if it is determined that two or more channels are being reproduced within the same time interval.

In the method of the present embodiment, the status of change of the audiovisual content being reproduced preferably indicates, in the case of reproduction of on-demand audiovisual content, a change of reproduction from a first item of on-demand audiovisual content reproduced at the start of the time interval to one or more items of on-demand audiovisual content reproduced after said first item of on-demand audiovisual content. In other words, in the case of on-demand content, a certain time interval is classified as being characterised by a change of content whenever two or more items of on-demand content are reproduced.

In the method of the present embodiment, when it is determined that, within a time interval, the device reproduces a first unit of content and at least a second unit of content after the first unit of content (i.e. two different units of content), the method preferably comprises a step of determining that the reproduction information indicates (i.e. that the content indicator indicates), as the unit of content reproduced in that interval:
(i) one between the first and the at least a second unit of content that is reproduced for a period of time exceeding a certain threshold within the respective time interval, or
(ii) the first unit of content, or,
especially where the zapping status is omitted, it is conceivable to add a third alternative to the above:
(iii) the last unit of content reproduced in the interval.

More in general, the above represent examples of a rule for assigning a single unit of content to a respective interval if a plurality of units of content are reproduced within the interval.

In other words, where two items of content are present in the same interval, the interval is associated with a single item of content (for example the one occupying most of the interval; for example, if a threshold of 50% is chosen, the interval is associated with the item of content which exceeds 50% of the interval) or to the first item of content reproduced (as this is likely to be the one the previous interval ended with). For example, between the first and second units of content, the one that is reproduced for longer than 50%, preferably longer than 60%, even more preferably longer than 70% of the time length of the interval will be indicated. Therefore, it is possible to assign an item of content to an interval when two units of content are present; this has shown to be relevant during the experimental phases, given that, especially in the presence of two items of content, a zapping status is not always present.

Where the zapping status is omitted, it is thus nonetheless possible to assign a unit of content to the interval.

The cases just described refer to circumstances in which, during an interval, one item of content is "mainly" reproduced, i.e. the duration of one item of content predominates in time over the duration of other items of content (predominant viewing of one item of content within an interval). In particular, what is described above allows an interval to be assigned to a single item of content also where the interval contains a plurality thereof.

Differentiating between a zapping status and a (predominant) viewing status of an item of content in the interval has shown to increase the accuracy of the training and/or the accuracy in identifying a user when the trained neural network is put into use. However, and as mentioned earlier, the solution works in a sufficiently accurate manner also when the information on the status of change of the audiovisual content being reproduced is omitted, as long as a single unit of content is assigned to the interval on the basis of a predetermined, repeatable assignment rule. The above options indicated as (i)-(iii) are examples of that rule or rules.

In the method of the present embodiment, the method preferably comprises a step of determining that the reproduction information indicates a status of change of the audiovisual content being reproduced when three or more items of content are reproduced within a time interval, as also illustrated further below by means of examples.

In the method of the present embodiment, determining that one or more units of content are reproduced in a time interval preferably comprises detecting the one or more units of content on the basis of at least one between (i) an input received from a reproduction selection device, and (ii) information about the one or more units of content sent by a distribution entity. The distribution entity is an entity configured for the transmission of the audiovisual content to one or more reproduction devices. In an example relating to (i), it is conceivable to distinguish one unit of content from a subsequent unit of content using the signals sent from a remote control, indicating, for example, that the selection of a certain channel will result in a change to a different channel (and therefore a different item of content); similar examples apply for other input devices (including a touchscreen) and/or on-demand content. In an example relating to (ii), it is possible to use metadata associated with the unit of content currently being reproduced; such metadata can be included in the unit of content or sent separately, both as regards linear audiovisual services and on-demand audiovisual services. One of the advantages of using metadata lies in the fact that data acquisition is simplified and independent of the input device used by the user (who can in fact change, for example, from a remote control, to an electronic pen to a touch on the screen for the same reproduction device). Furthermore, while on the one hand it is preferable to choose one field within the metadata as a field of reference for identifying a certain unit of content, during the experimentation it was shown that it is sufficient and also advantageous to provide metadata without any (pre)selection of reference fields, as in such a case the neural network will automatically extract an identifier of the unit of content agnostically with respect to the semantic meaning of the fields of the metadata or agnostically with respect to the cognitive meaning/aspect of the information represented by the metadata or by the audiovisual content itself. If it is desired to reduce the computing resources necessary for training (and/or for subsequent use of the trained network), it is possible to select one or more fields of the metadata to be used during the training, such as, for example, a PID of the program, etc.

In the method of the present embodiment, the content indicator preferably comprises an identifier of the unit of audiovisual content which identifies the unit of content. As mentioned, the identifier need not necessarily be unique; it is sufficient that it makes it possible to specify, in an element of the sequence, an identifier of the unit in the time interval to which the element of the sequence refers. The identifier of the unit of content preferably uniquely identifies one unit of content within a time interval of one element of the sequence of elements of information about use. The identifier of the unit of audiovisual content preferably identifies one unit of content from a previous and/or subsequent unit of content; if the end of a first unit of content and the start of the repetition of the same unit of content take place within a same interval, the identifier provides a distinction between the two (for example, ID-1 and ID-2; in fact, the video frames of the two units are not usually equal within the same interval).

In the method of the present embodiment, each element of the sequence of elements indicating information about use preferably comprises sharing information indicating whether use of the reproduction device takes place through a single user or a plurality of users. In this manner, the network can be trained according to the mode of sharing the reproduction device content. For example, the single- or multi-user viewing mode can be specified during the training step, and optionally also during use of the network trained. However, it is not necessary to specify the viewing mode either during training or during use.

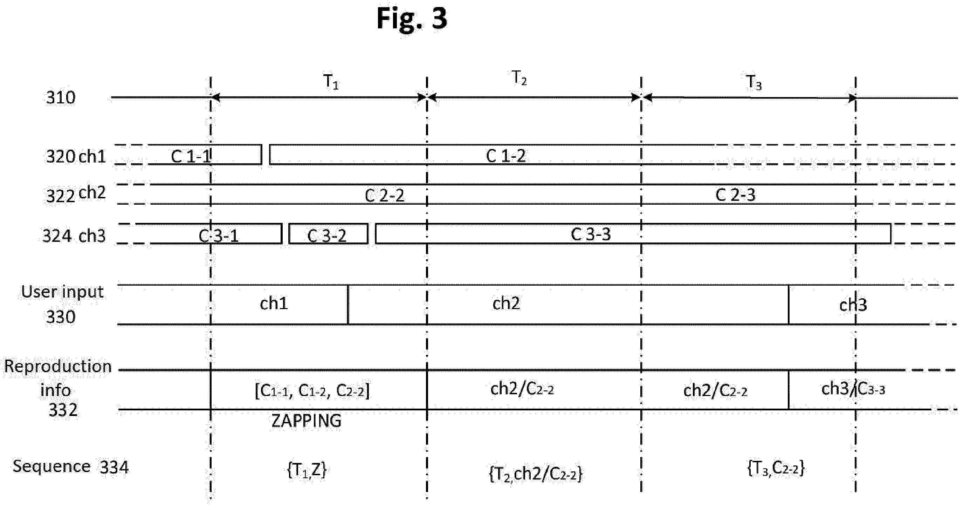

With reference to figure 3, it illustrates a non-limiting example of how it is possible to acquire a sequence of information about use (or sequence of elements). Let us assume we have three linear channels ch1, ch2, ch3, wherein different items of audiovisual content (audiovisual programmes) follow one another for each channel; for example, as indicated in the figure, in the case of channel ch1, the content items C1-2, C1-2, etc. follow one another (see line 310); in the case of channel ch2, the content items C2-1, C2-2, etc. follow one another (see line 320); in the case of channel ch3, the content items C3-1, C3-2, etc. follow one another (see line 330). Line 310 represents an axis of the times in which time intervals T1, T2 are indicated; one or more intervals can be present before interval T1 and/or one or more intervals can be present after interval T2. Line 330 illustrates the channel displayed as a consequence of the user's choice, made, for example, by means of a remote control in the case of a television set, by means of a touchscreen, etc. In the example, as a consequence of the user's input, at the start of interval T1, channel ch1 is being reproduced, and during interval T1 a change of channel from ch1 to ch2 takes place. Correspondingly, in the interval T1, reproduction of the content items C1-1, C1-2, C2-2 takes place in sequence as indicated in line 332. In the interval T2, there is no change of channel, and thus solely the content item C2-2 is displayed. In the interval T1 it is determined that a status of change of audiovisual content (or a zapping status; hopping between channels and/or hopping between programmes) has arisen, since in the example there are three units of content and two different channels reproduced in the interval T1 (one of the two conditions alone is sufficient).

The acquired sequence of elements is indicated in line 334; the sequence can be represented, for example, by:
{T1; Z}, {T2; C2-2}, ...
wherein Z indicates a status of change of audiovisual content. However, the sequence can be represented and/or implemented also in other ways, for example:
   {T1; C1-1, C1-2, C2-2}, {T2; C2-2}, ..., in which case the presence of two or more content identifiers can be interpreted (for example conventionally, that is, on the basis of a predefined rule) as a content change status; or
   {T1; Z; C1-1, C1-2, C2-2 }, {T2; C2-2}, ..., in which case a content change status is indicated both explicitly (by Z) and implicitly (by means of the list of two or more different items of content).

In other words, in the example in figure 3, information about the reproduction status of the reproduction device (e.g. identifier of the channel and/or unit of content, and/or content change status) is given at predefined intervals of time (T1, T2, ...), and the information about the reproduction status is associated with the corresponding time slot. The information about the reproduction status can be directly derived from metadata associated with the units of content reproduced. In this manner, therefore, one obtains a sequence of data to be subjected to the neural network. Furthermore, by associating this sequence with a known user identifier (for example, because it is declared by an actual user, also but not necessarily in anonymous form, or because it is simulated, see further below) it is possible to obtain a dataset with which to train the neural network. During training, the parameters (e.g. weights) of the neural network will be determined in order to enable the latter to assign, during operation, an identifier. During use or operation, the network will be supplied with a sequence of elements as described above; the network will thus be able to output a user identifier which distinguishes that user from identifiers of other users of the same group. The sequence of elements thus represents an input, to be provided to the neural network (in the training step, or after training), of samples that can be acquired continuously over time (in the sense that the sequence, sampled at given time intervals or instants, continues to be acquired over time without necessarily being restricted to a pre-established acquisition period or to a pre-established number of samples). During use of a trained network, this characteristic of the acquired sequence enables online use of the solution described herein, that is, the network estimates the identifier by taking into account the sequence that is acquired continuously over time.

Again with reference to figure 3, one can also see the case in which, in the interval T3, the user changes from channel ch2 (content C2-2) to channel ch3 (content C-3) just beyond halfway through the slot; in this case it can be determined that, since the content C2-2 is reproduced for a sufficiently long (predominant) duration within the slot, the entire slot T3 will be associated with the content C3-3. Therefore, the respective element of the sequence can be represented as: {T3, ch2}, or {T3, C2-2}.

In the example in figure 3, a linear channel is considered. Similar considerations also apply, however, in the case of on-demand content: for example, channel ch-1 represents a catalogue offered by a first content provider (for example by means of a respective App), ch2 and ch3 catalogues provided by other providers. It is further noted that, especially in the case of on-demand content, it is not necessary to have different channels/catalogues, since the solution also works on the basis of a single catalogue (i.e. considering only how the user navigates within a catalogue; in this case, only the first catalogue indicated by ch1 would be present in figure 3).

What was stated above with reference to the first embodiment (including the optional or preferable aspects, as well as the examples) applies equally or in a corresponding manner to what is described below with reference to other embodiments and/or examples and vice versa, unless otherwise indicated. Repetitions are thus avoided, and it is understood that what is described above may be combined with what is described below and vice versa.

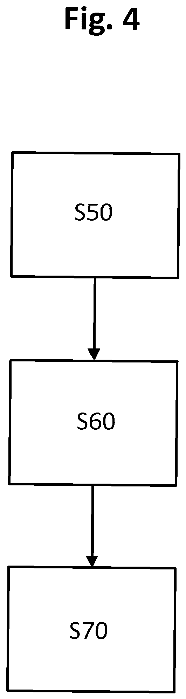

With reference to figure 4, a second embodiment will now be illustrated, relating to a method for assigning an identifier to a user by means of a neural network, wherein the user is comprised in a group of users who share use of a device for reproducing audiovisual content. In other words, the method of the first embodiment (see also for example figure 1) refers to the training of a neural network, whilst the method of the present embodiment (see also for example fig. 4) refers to the use of a trained neural network to assign user identifiers which enables one user to be distinguished from other users, in particular belonging to a same group that shares use of a reproduction device. In a step S50, a sequence of elements is acquired for at least said one user, wherein each element of the sequence comprises temporal information and respective reproduction information, and wherein the temporal information and the respective reproduction information are associated; in other words, the reproduction information within an element of the sequence refers to the time interval indicated by the temporal information contained in the same element of the sequence. The temporal information indicates a time interval. The reproduction information comprises a content indicator indicating that a unit of audiovisual content is reproduced by the device within said respective time interval; optionally, the reproduction information comprises a content change indicator indicating a status of change of the audiovisual content being reproduced for said time interval. An element of the sequence can follow the same representation or implementation of an element of the sequence used in the training step (see the examples illustrated above in the discussion about figure 3), or follow a different representation or implementation; what counts is that the reproduction information contained in one element of the sequence corresponds during both training and use. The acquisition of such information can take place by acquiring an input provided by the user (by means of a remote control, touchscreen, etc.) and/or by gathering information (for example metadata) associated with the audiovisual content and/or channel while the latter is being reproduced.

In step S60, the acquired sequence of elements input to a neural network that has been trained to assign known user identifiers to sequences of training elements corresponding to respective users. In other words, it can be said that this embodiment is thus aimed at the case in which a neural network, previously trained to assign identifiers to a user, is used (put into operation) to identify users who have not been actively authenticated and/or identified.

In step S70, one obtains, as output from said neural network, a user identifier corresponding to the sequence of elements. The identifier assigned in step S70 is therefore an identifier making it possible to distinguish the user (for whom the sequence of information had been acquired in step S250) at least from the other users of the group of users who share use of the reproduction device. In other words, when the trained neural network is put into operation on receiving, as input, an acquired sequence of information corresponding to a user Aj (who is enjoying content by means of a reproduction device shared by the group A of users), the neural network determines or assigns an identifier ID-Aj for the user, which thus becomes an identifier for the user Aj at least within the group A of users. The identifier ID-Aj can be an identifier used in the training step, or a different (or personalisable) identifier provided that said identifier is consistently and repeatably output by the neural network in relation to a same input sequence of elements. Based on the tests carried out, it was found that the identifier determined on the basis of an acquired sequence of elements uniquely represents, at least within the group A, a real user of the group. Therefore, it is correct to affirm that the trained network is capable of distinguishing one user from other users belonging to a group.

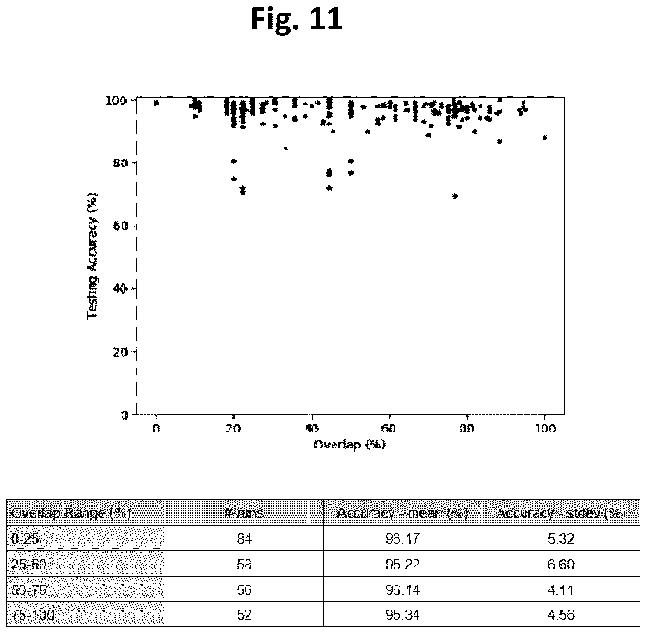

As mentioned earlier, though preferable, it is not necessary to train the neural network on the basis of a user Aj in order to recognise the same user Aj when the neural network is put into use; in fact, it has been shown that a network trained on the basis of a user Ak belonging to a group A (and/or on the basis of a user Bi belonging to a group B different from A) is capable of detecting the identifier for a user Aj, i.e. of distinguishing the user Aj at least within the group A. The accuracy increases with increasing numbers of users and/or numbers of sequences and/or numbers of elements in each sequence. Furthermore, it has been shown that, also when the network is trained on the basis of an artificial data set, as is discussed further below for example with reference to the tests (see also figure 11, which reproduces the results), the network is capable of distinguishing one user from other users of a given group of users.

The neural network was preferably trained (before being put into use) to assign user identifiers on the basis of a sequence of elements indicating information about use, wherein each element of said sequence comprises temporal information and reproduction information that indicate a reproduction status (of the reproduction device) in a time interval indicated by the respective temporal information. In other words, the neural network which, during use, assigns an identifier to a user to distinguish it from other users of a group, has been trained to distinguish one user from other users of a group on the basis of a sequence of elements which contains references to time intervals and information about the reproduction status of the reproduction device in the respective associated time interval.

The reproduction status preferably provides an indication regarding a reproduction of audiovisual content reproduced by the reproduction device in the time interval. In other words, the reproduction status indicates a characteristic of what is reproduced on the screen. That indication can preferably refer to a channel prevalently reproduced in the time interval and/or it can indicate that there is a change between the units of content reproduced.

Based on what has been described thus far, it appears clear that training comprises determining the parameters of the neural network so that the latter (once trained, and put into use to identify or distinguish users) is capable of distinguishing one user from others of the group. Both during the training step and during use, the neural network is supplied with a sequence of elements, wherein each element indicates a time interval and a reproduction status in that time interval. As mentioned above, the implementation or representation of each element (and therefore of the sequence) need not be the same during training and use, as long as the sequence (and the elements thereof) provides an association between time references and reproduction statuses are associated therewith.

By virtue of what has been illustrated in the present disclosure, it is possible to distinguish one user from other users of a same group who share use of a reproduction device, without the user having to be actively authenticated or identified, and without the device having to implement particular sensors for identifying the user (e.g. sensors with fingerprint recognition, face recognition systems or systems for the recognition of biometric parameters, etc.). Therefore, the construction and use of the device are simplified.

The user identifier can therefore be used, for example, to personalise the use of audiovisual content. For example, on the basis of a given identifier, it is possible to personalise: the transmission of audiovisual content (e.g. quality of transmission, whether or not to transmit additional traces to optimise the bandwidth, etc.); and/or reproduction (e.g. volume level, format to be reproduced, buffering level, settings of the reproduction device, etc.); and/or display (dimensions of the content within the screen, setting of display parameters such as brightness, contrast, etc.) and/or experience of using the audiovisual content (e.g. association of applications, personalisation of services, etc.).

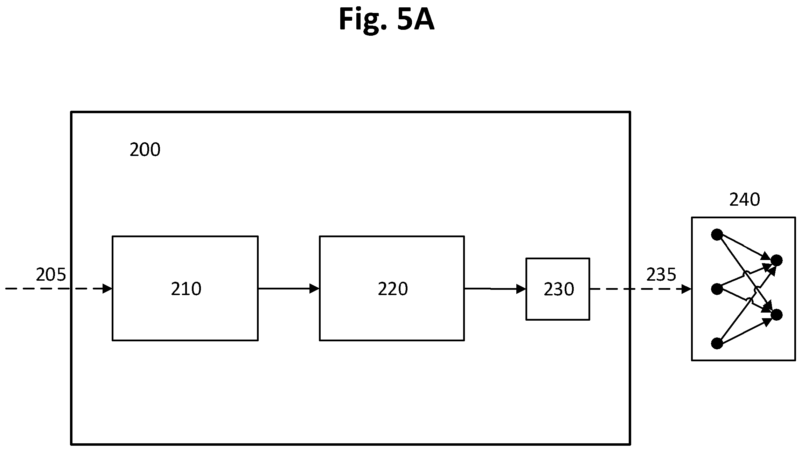

With reference to figure 5A, a third embodiment will now be illustrated, relating to an entity 200 configured to train a neural network to assign an identifier to a user, the user being comprised in a group of users who share use of a device for reproducing audiovisual content. The entity 200 comprises an acquisition unit (210), a generating unit(220) and a training unit (230).

The acquisition unit (210) is configured to acquire, for at least one user Ai, a sequence of elements indicating information about use. Each element of the sequence comprises temporal information indicating a time interval and reproduction information that refers to a respective time interval; the reproduction information comprises a content indicator indicating that a unit of audiovisual content is reproduced by the device within said respective time interval or a status of change of the audiovisual content being reproduced for said time interval. In one example, the sequence of elements indicating information about use can be acquired by the unit 210 from an input device operated by a user to control the content reproduction device (by means of an interface 205, for example an infrared interface for remote controls, or a wireless interface, etc.), in particular to control which unit of content should be reproduced; examples of the input device include a remote control, and/or a touchscreen, etc. In another example, the sequence of elements indicating information about use can be acquired by the unit 210 from the reproduction device (and not the input device; in such a case, the interface 205 represents a wired or wireless communication channel between the entity 200 and the reproduction device); in fact, the reproduction device can provide the entity 200 with indications as to which item of content or sequence of items of content the device itself (e.g. the television set) is reproducing. In another example, the sequence of elements indicating information about use can be acquired by the unit 210 from another entity in the form of a sequence created artificially (e.g. in a laboratory) for training purposes; in such a case, the interface 205 is an interface for receiving data from the outside (wireless, with a removable memory, etc.). In other examples, the unit 210 receives an indication of which items of content are reproduced, e.g. from an input device, the reproduction device or another entity; in such a case, the unit 210 (or another one provided) can therefore generate the elements of the sequence on the basis of the indications received. Such examples can be combined together (e.g. some data received from a remote control, some from the television set, or both received and combined to avoid errors).

The generating unit (220) is configured to generate a data set comprising the sequence of elements relating to the user and an identifier (ID-Ai) of the user.

The training unit (230) is configured to train the neural network on the basis of the data set thus obtained. The training unit 230 can be represented by a controller that controls a neural network in order to train it on the basis of the data set, or it can be comprised in the neural network or represented directly by the neural network to be trained. In this manner, it is possible to train a neural network, for example by determining the weights of the neural network that make it capable of distinguishing one user from other users on the basis of the sequence of information.

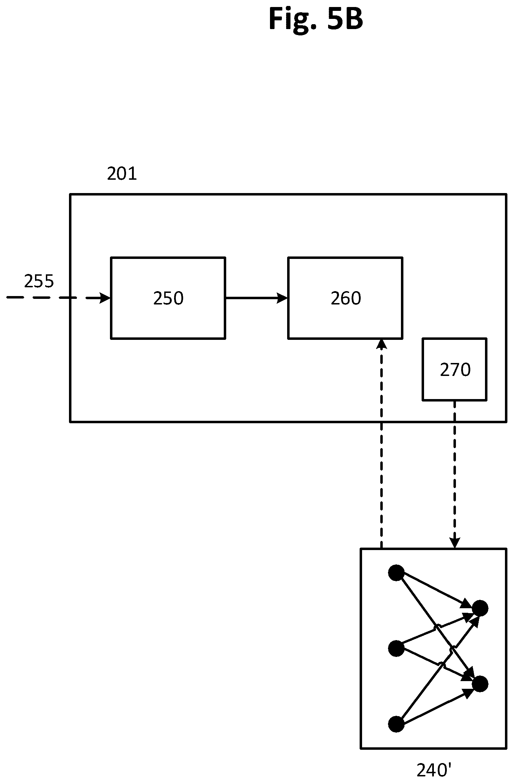

With reference to figure 5B, a fourth embodiment will now be illustrated, relating to an entity (201) configured to assign an identifier to a user by means of a neural network, the user being comprised in a group of users who share use of a device for reproducing audiovisual content. The entity 201 comprises an acquisition unit (250), a supply unit (560) and an obtainment unit (270).

The acquisition unit (250) is configured to acquire, for at least said user, a sequence of elements. Each element of the sequence comprises temporal information and respective reproduction information, wherein the temporal information and the respective reproduction information are associated; in other words, the temporal information indicates a time interval to which the reproduction information refers. The temporal information indicates a time interval and the reproduction information comprises a content indicator indicating that a unit of audiovisual content is reproduced by the device within said respective time interval or a status of change of the audiovisual content being reproduced for said time interval. The acquisition entity receives information via the interface 255, for which the same or corresponding considerations as for the interface 205 of figure 5a are valid.

The supply unit (560) is configured to supply said sequence of elements as input to a neural network, wherein the neural network has been trained to assign known user identifiers to sequences of training elements corresponding to respective users. For example, the neural network can be trained using a method according to the first embodiment and/or by means of an entity of the third embodiment.

The obtainment unit (270), which can also be called output unit, is configured to obtain, as output from said neural network, a user identifier corresponding to the sequence of elements. The neural network can be comprised in the entity 201, or external to the entity 201, which thus receives the result output by the neural network by means of the unit 270.

The entities 200 and 201 can be produced separately or concentrated or distributed within a same device. Furthermore, each or both can contain a neural network (trained by the entity 200 and respectively used by the entity 202), or can interact with a neural network supplied separately by one or both of the entities 200 and 201. Said neural network is represented by 240 and 240' in figures 5a and 5b, respectively. It should be noted that the neural networks 240 and 240' can all refer to the same neural network, but this is not strictly necessary. In fact, it is conceivable to train a first neural network 240 and derive therefrom the trained parameters (for example the weights for each node as determined after the training); these parameters can therefore be applied to a network 240', having a structure that is at least similar, preferably identical, to that of the network 240.

According to a further embodiment, there is provided a computer program configured to carry out, when said program is executed on a computer, any combination of the steps according to any one of the methods and/or examples described in the present disclosure.

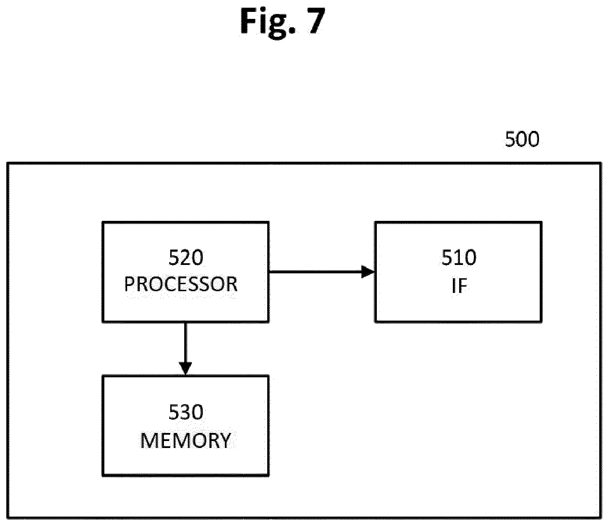

Figure 7 illustrates a block diagram exemplifying a computer (500) capable of executing the aforesaid program. In particular, the computer (500) comprises a memory (530) for storing the program instructions and/or the data necessary for the execution thereof, a processor (520) for implementing the instructions and an input/output interface (510). In particular, figure 7 is illustrative and non-limiting, since the computer can in fact be constructed either in such a manner as to be concentrated in one device, or in manner such as to be distributed over a number of interconnected devices. Therefore, the program can be executed locally on a concentrated (localised) or distributed device.

According to a further embodiment, there is provided a medium for supporting a computer program configured to implement, when the program is executed on a computer, one or a combination of the steps according to the method described in the first embodiment. Examples of a medium are a static and/or dynamic memory, a fixed disk or any other medium such as a CD, DVD or Blu-Ray. The medium also comprises a means capable of supporting a signal representing the instructions, including a means for wired transmission (ethernet, optical, etc.) or wireless transmission (cellular, satellite, digital terrestrial transmission, etc.).

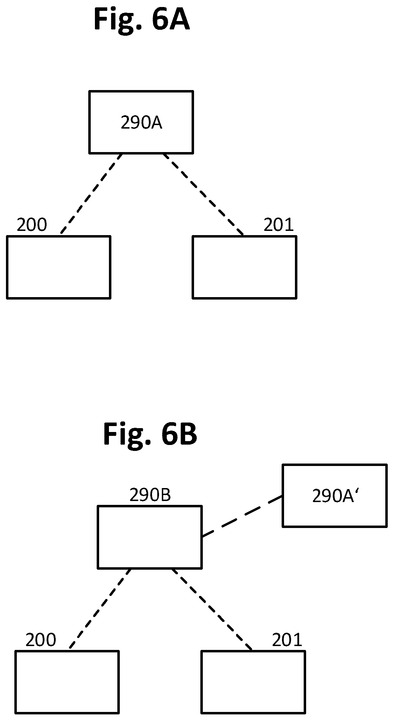

Figure 6 illustrates examples of systems according to other embodiments. Figure 6(a) illustrates a reproduction device 290A, for example a television set (or tablet, etc.), which can be connected to a training entity 200 and/or to an entity 201 for assigning user identifiers as described above. Figure 6B illustrates a system wherein the reproduction device is represented by a set-top box 290B (or another device 290B capable of receiving audiovisual content) which can preferably be connected to a display device (television set, monitor, etc.); the device 290B can be connected to a training entity 200 and/or to an entity 201 for assigning user identifiers as described above. The units 200 and/or 201 can be integrated into the respective reproduction device 290A and/or 290B, or connected thereto. In the latter case, the entities 200 and/or 201 can be remote from the device 290A and/or 290B, or local (nearby).

Illustrative examples relating to what has been described in the present disclosure are illustrated below. In the example, it is possible to identify the user by looking at how they navigate through the offerings (whether based on a linear channel and the programme schedule thereof or on a catalogue) and what content they select, by means of a neural network capable of considering:
- Channel hopping sequence, and/or
- Time spent on the channels, and/or
- Programme underway.

In the example, a number of people are considered, e.g. a nuclear family watching television. The example is based on the recognition that each member of an audience (at least within a group) has a unique and personal way of navigating through the television offerings and the catalogue of content. This way represents a sort of digital footprint (an individual characteristic that is objectively detectable, also in a repeatable manner, and independently of the user's subjective considerations) that enables a user to be identified with a high level of accuracy, preferably (or with higher accuracy) when within a known group of people. In the example in question, identification of the user takes place through different viewing modes, which can be considered as cases of use (as illustrated further below, the viewing mode is not necessary and can be omitted). It is important to observe that these modes are not made explicit, as we are not able to establish the number of people in front of the television set. However, it can be useful to take them into account in order to render the identification more robust and reliable.

| | |
|---|---|
| *Individual Viewing* | A member of the family, for example a parent or a child, watches television, |
| | navigating with the remote control within the programme offerings. |
| *Family Viewing* | Several members of the family watch television together, navigating with the remote control within the programme offerings. In this case the choice of the content/channel is influenced by the presence of a number of people. |
| *Delegated Viewing* | A member of the family (e.g. a parent) uses the remote control based on indications of others (e.g. child). In this case the choice of the delegating family member, who is the actual consumer of the offering, goes through the action of the delegated member. |
| *Passive Viewing* | The television set is on in the background. There is not necessarily any intentional selection, or attentive consumption, of the content. |

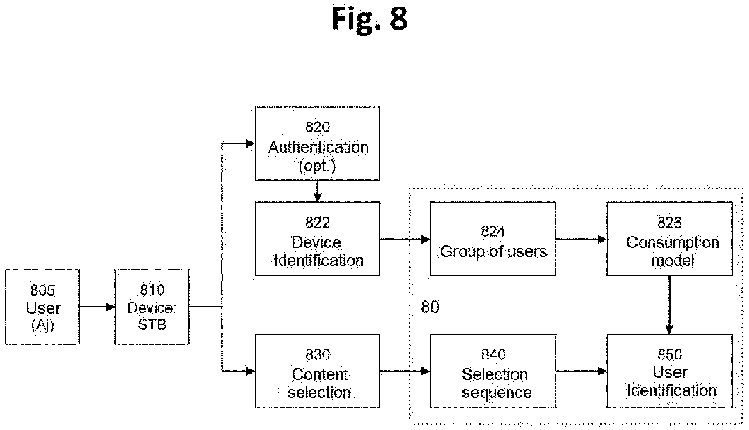

Figure 8 illustrates a block diagram according to the example discussed here. Some aspects of the present example are briefly as follows:
- The user (805) accesses the offerings by means of a device (810), which can be STB, WEB or FTA;
- Optionally, the user is authenticated (820) according to the schemes for accessing the service provider's products; this leads to identification of the device (822, both in the presence and absence of authentication).
- Identification of the device leads to identification (824) of the group of users who potentially use that device;
- The model (826) associated with the group of users is selected accordingly;
- The user interacts with the device in order to navigate and select the content of the offerings (830, programme schedule/linear channel, or catalogue in the case of on-demand content)
- A selection sequence (840) is acquired;
- The selection sequence applied to the preselected consumption model leads to identification of the user (850; in the example, this represents an example of a trained neural network as described in the present disclosure).

The unit 80 in figure 8 is an example of the entity for assigning an identifier to the user, which is optionally capable of taking into account the single-user or multi-user viewing model (set, for example, by the block 850).

The data that are acquired from one or more users (during use of the previously trained network) can be analysed according to two methods, which are not mutually exclusive:
- *On-line analysis.* The analysis (850) is conducted online with respect to data acquisition (840), so user identification takes place during access to the offerings by means of the linear channel or on-demand catalogue. This method makes it possible to personalise the reproduction of content during the enjoyment thereof. This type of analysis looks at the selection sequence obtained up to that moment; it thus has lower levels of accuracy than off-line analysis.
- *Off-line analysis.* The analysis is conducted (at least in part) a posteriori relative to the data acquisition, so user identification takes place a posteriori, that is, with a time lag relative to enjoyment. In this case higher levels of accuracy are obtained, it being possible to access the entire selection sequence. Though it not possible to achieve real-time personalisation, this method nonetheless enables a certain type of personalisation to be determined, for example optimisation of the transmission or selection of content formats for that user, wherein said personalisation of the transmission or selection can be used from the subsequent identification (also in real time) of the same user.

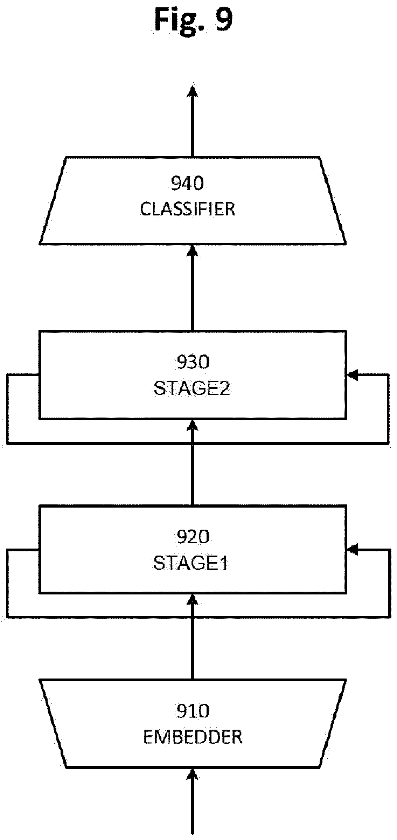

With reference to figure 9, an example of a neural network will now be illustrated to which what has been described in the present disclosure can be applied. The neural network of this example is a two-stage recurrent neural network; the consumption of content is sampled over time with regular time slots ranging from 10 seconds to 2 minutes (these are non-limiting examples of duration of the time intervals described above; in particular, intervals longer than 2 minutes can be used). The sampling frequency can be decided at the time of setting the solution. Every slot (time interval) is associated with the identifier of the content the user has selected in that moment, following for example this method:
1. If the user has selected or is enjoying an item of content that falls solely in that slot, that content (e.g. the channel the user is tuned into) is attributed to the slot;
2. If the slot extends over two items of content, the first item of content is assumed, or else the second item if the latter has occupied more than 70% of the slot (e.g. when the user changes the channel);
3. If a number of items of content are associated with the same slot, the slot is classified as a zapping slot and, with the exclusion of the first item of content in continuity with the previous slot, a zapping sequence with the selected content (e.g. zapping from a remote control) is associated with it.

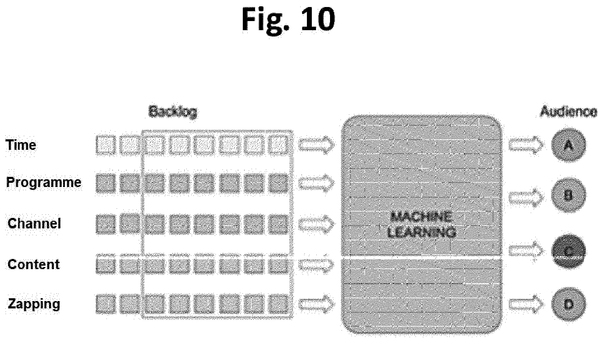

In this manner, one obtains a sequence of elements as described above. The content identifier (e.g. the channel or catalogue title) and the metadata describing the content thereof (e.g. genre) can be associated with every slot, as is summarily expressed by figure 10. In particular, it is possible to supply all the metadata as the content identifier, or only a combination of fields contained in those metadata (as illustrated in figure 10), or also only one or a combination of the fields illustrated in figure 10. In fact, in this regard it would be sufficient that the indicator indicates, for example, that an item of content refers to "news", as opposed to the following one representing a "film" or "sport"; in another example, a PID or a parameter uniquely identifying the unit of content can be taken. During and/or after training, these parameters (e.g. metadata fields) are appropriately associated by the neural network, even though it is not relevant to know which associations the network makes or how it arrives at such associations.

The selection sequence thus described is input to the neural network. A first embedding stage 910 (going back to figure 9) serves to project every single data point associated with a time slot into a space with greater dimensionality. The dimensionality of the space representing every time slot is decided at the time of configuring the solution, with a value that varies, for example, between 100 and 300 (other values can be determined in the configuration step). Every value of the sequence thus projected is input to the first stage (920) of a recurrent cell, which outputs a dimensionality equal to the input. The value is thus input to a second recurrent cell (930), with the same architectural features. The output of the second stage is input to a classifier (940) which provides the user identification. More specifically, the components of the neural network according to the example described can include:
- Embedder 910: for example, two levels fully connected with a number of neurons of the central level equal to the average between the dimension of the input space and the dimension of the representation space;
- Stage 1 (920) and stage 2 (930): two LSTM cells;
- Classifier (940): two levels fully connected with a number of neurons of the central level equal to 4 times the ratio between the output dimension of the second stage and the maximum number of users to be distinguished from one another.

The network of this example is only illustrative, and in fact one of the two stages can be omitted or other stages added. And more in general recurrent convolutional and/or LSTM networks can be used.

Going back to the example: training of the network can take place according to different methods:
- Training (Supervised): There exists a first step, in which the user declares their identity so as to train the system to identify patterns of behaviour associated with different users and scenarios.
- Grouping (Non-supervised): The system autonomously learns how to identify homogeneous clusters of behaviour, ignoring the identity of the users.
- Projection: Learning takes place on a sample of users in order then to be used to analyse the behaviour of users belonging to groups that are homogeneous with the ones used for training.

In the tests carried out, accurate results were obtained with each method.

It is optionally possible to apply each of the following solutions or a combination thereof to the example discussed and/or to the embodiments and/or to the other aspects described in the present disclosure:
- the data can be collected by the return channel of the STB, crossing them with the programming data, in relation to the time of day, and/or the programme being broadcast, and/or the channel, and/or the type of content and/or the zapping activity that has taken place;
- This information can be analysed by an automatic learning algorithm in order to associate them with one or more members of a nuclear family whose composition is known in advance.
- the system of analysis can perceive only a very limited portion of reality through the use that is made of the remote control. Through this portion, however, it can be capable of determining the size and composition of the audience with a high degree of accuracy (>80%).

An experiment was carried out in order to validate what has been described in the present disclosure, taking as an example a nuclear family made up of:
A: Father
B: Mother
C: Son (child)
D: Daughter (teenager)

For the sake of simplicity, reference will be made to individual viewing, in which a member of the family (parent or child) watches television navigating through the programmes with the remote control. In order to identify who is in front of the television set (that is, to distinguish the user who is watching television from other users who share the use thereof), only the sequence of channels selected by each member of the family was considered. The dataset was created in vitro, by generating traces of behaviour on the basis of a probabilistic model capable of exemplifying the use of a number of channels. In particular, 10 different channels were considered. A number of preferred channels between 3 and 6 was assigned to each member of the family. The likelihood of each user remaining on the current channel (and thus the complement of changing the channel) was recorded in a matrix given by the number of members of the family by the number of channels (10). In particular, these values are chosen randomly at the start of the simulation within defined intervals, as shown in the table:

| | Favourite Channel | Different Channel |
|---|---|---|
| Likelihood of remaining | [0.8 - 1.0] | [0.3 - 0.5] |
| Probability of changing to a favourite channel | [0.4 - 0.7] | [0.3 - 0.5] |
| Probability of changing to a channel other than a favourite one | [0.1 - 0.2] | [0.1 - 0.2] |

For each user the starting channel was selected on the basis of a likelihood value randomly selected in the interval [0.8 - 1] for a favourite channel and [0.3 - 0.5] for a different channel.

The actual probabilities governing the trace-generating stochastic process are obtained by normalisation of the values thus defined so as to respect the likelihood ratios between them.

Two hundred traces (channel sequences) were associated with each member following the set probabilities, 2 assuming a sampling every 3 minutes (20 samples an hour) and a duration of viewing ranging between 2 and 4 hours, hence sequences having a variable length comprised between 40 and 80 samples each.

The base model used was LSTM, it being a recurrent neural network (RNN) capable of learning dependencies between both short-term and long-term events. In this manner, the system revealed to be capable of identifying behavioural patterns associated with different users at different times.

The experiment was repeated 250 times in order to test the behaviour of the model as the simulation scenario given by the trace-generating stochastic process varied. Every data set generated for each simulation run was characterised in terms of overlap of the favourite channels, so as to put situations in which the identification is due to a substantial difference in the selection of favourite channels (simplest case) in relation to those in which the identification depends on the particular sequence followed in the selection of channels (most difficult case).

Figure 11 shows the accuracy obtained in the 250 simulation runs, considered in relation to the degree of overlap. Out-of-sample testing (20%) was conducted in order to ensure reliability and robustness of the experimental results.

In the majority of the experiments, the accuracies obtained were above 90%, except in some spurious runs in which the learning was not able to converge, given the random character of the initialisation of the network parameters. The level of overlap between the favourite channels of the family members does not have a significant effect on model performance, given that the individual patterns of each member are different, since the probabilities of remaining on or changing channels are different. In other words, even if two users have the same preferences in terms of channels and/or content, the solution proposed succeeds in distinguishing them in an objective manner irrespective of individuals' subjective preferences, as recognised by the inventors and confirmed by testing. Furthermore, the test confirms that the identifier is determined without having to rely on the type of content viewed by each user, that is, also on the basis of identifiers that are agnostic with respect to content; this is also contrary to what one would usually expect, since it is deemed in the art that knowledge of the type of programmes (e.g. children's, sports, musical, news, etc.) is information which is necessary in order to characterise the preferences of a user and thus to distinguish one user from another.

The table below shows the mean value and variance of the accuracies of the runs belonging to different overlap ranges:

| Overlap Range (%) | # runs | Accuracy - mean (%) | Accuracy - stdev (%) |
|---|---|---|---|
| 0-25 | 84 | 96.17 | 5.32 |
| 25-50 | 58 | 95.22 | 6.60 |
| 50-75 | 56 | 96.14 | 4.11 |
| 75-100 | 52 | 95.34 | 4.56 |

The experiment thus revealed that the accuracy is very high, and, surprisingly, that it does not depend on subjective values such as an individual's channel preferences. In fact, the accuracy remains high and substantially unchanged irrespective of the degree of overlap, which indicates, precisely, that both when the preferred channels markedly overlap and when they overlap partially or not at all, the system remains capable of distinguishing one user from the other users of the group. This was also confirmed by other tests.

Based on the foregoing, it is thus clear that the solutions proposed in the present disclosure make it possible to accurately distinguish an individual who is using a content reproduction device without the necessity of any active authentication (e.g. entry of user notes and passwords by means of devices such as remote controls) or authentication by means of specific devices (facial recognition, biometric parameters, etc.). Furthermore, this automatic recognition is objectively achievable and independent of subjective parameters of an individual, such as possible preferred channels and/or programmes.

As in known in the art (see for example ITU-T H-720 of 10/2008), linear television means a television service in which a continuous stream flows in real time from the service provider to the terminal device and in which the user cannot control the temporal order in which the content is displayed. Linear TV thus comprises a television broadcast service that is substantially identical to the classic form of television services provided by broadcasting operators (e.g. satellite terrestrial, via cable, direct-to-the-home, via Internet streaming, OTT streaming, etc.), wherein the content of the programme is transmitted according to a defined schedule and is intended for real-time consumption by the end user. The service thus provides an essentially continuous stream that flows from the content provider to the terminal device located in the end user's network.

An on-demand audiovisual service or content, in contrast to a linear service, is a service or content that can be directly selected by the user. Therefore, the user can control the temporal order in which one or more items of content are reproduced.

Unit of content means, for example in the case of linear channels, a programme of a linear channel (such as, for example, from a programme schedule for linear TV); in the case of VOD, a unit of content represents a unit of on-demand audiovisual content that can be selected from a respective set of units of content (e.g. from a respective list, such as, for example, from a VOD catalogue or VOD bouquet). The user can change the units of on-demand content, for example by interrupting the reproduction of one item of content in order to go on to another, and/or create a list for the reproduction of units of content.

Many of the embodiments and examples have been illustrated with reference to steps of methods or processes. However, what has been described can be also implemented in a program to executed on a computing entity (concentrated in a device such as a computer, which may also be distributed) or on an entity whose means are appropriately configured to carry out the corresponding method steps. The entities described above, as well as their components (for example the units thereof), can be implemented in a single device, via hardware, software, or a combination thereof, or across multiple interconnected units and/or devices (similarly hardware, software, or a combination thereof). In other words, each or some of the entities described above, as well as each or some of the components thereof (for example the units thereof) can be implemented locally (on a single device) or in a distributed manner (on various devices capable of communicating) and through a combination of hardware and/or software. Furthermore, the units described above can be replaced by respective means (for example, acquisition unit (210) by acquisition means (210); generating unit by generating means, etc.). Furthermore, an acquisition unit (210, 250) can be described as a data input unit (or data input interface), as can the obtainment unit; the generating unit and/or the training unit can be described as a processor and/or controller; the supply unit 560 as a data output unit (or data output interface).

Naturally, the above description of embodiments and examples applying the principles recognised by the inventors has been provided solely as an example of such principles and must therefore not be understood as a limitation of the scope of the invention claimed herein.

## Claims

1. A method for training a neural network to assign an identifier to a user, the user being comprised in a group of users who share use of a device for reproducing audiovisual content, the method comprising the steps of:
- for at least said user, acquiring (S10) a sequence of elements indicating information about use, each element of the sequence comprising temporal information indicating a time interval and reproduction information that refers to a respective time interval, wherein the reproduction information comprises a content indicator indicating that a unit of audiovisual content is reproduced by the device within said respective time interval, wherein said sequence of elements comprises elements referring to successive time intervals;
- generating (S20) a data set comprising said sequence of elements relating to said user and an identifier of said user;
- training (S30) the neural network on the basis of said data set.

2. A method for assigning an identifier to a user by means of a neural network, the user being comprised in a group of users who share use of a device for reproducing audiovisual content, the method comprising the steps of:
- for at least said user, acquiring (S50) a sequence of elements, each element of the sequence comprising temporal information and respective reproduction information, wherein the temporal information and the respective reproduction information are associated, and wherein the temporal information indicates a time interval and the reproduction information comprises a content indicator indicating that a unit of audiovisual content is reproduced by the device within said respective time interval, wherein said sequence of elements comprises elements referring to successive time intervals;
- providing (S60) said sequence of elements as input to a neural network, wherein said neural network has been trained to assign known user identifiers to sequences of training elements corresponding to respective users according to the method of claim 1;
- obtaining (S70), as output from said neural network, a user identifier corresponding to said sequence of elements.

3. The method according to claim 1 or 2, wherein the reproduction information comprises a content change indicator indicating a status of change of the audiovisual content being reproduced for said time interval.

4. The method according to claim 3, wherein the status of change of the audiovisual content being reproduced comprises, in the case of reproduction of linear channels by means of the reproduction device, a status of change of channel, indicating that the reproduction has changed from an initial channel being reproduced at the start of the time interval to one or more channels reproduced after the initial channel.

5. The method according to claim 3 or 4, wherein the status of change of the audiovisual content being reproduced indicates, in the case of reproduction of on-demand audiovisual content, a change of reproduction from a first item of on-demand audiovisual content reproduced at the start of the time interval to one or more items of on-demand audiovisual content reproduced after said first item of on-demand audiovisual content.

6. The method according to any one of the preceding claims, wherein, when it is determined that in a time interval the device reproduces a first unit of content and at least a second unit of content after the first unit of content, the method comprises a step of determining that the reproduction information indicates, as the unit of content reproduced in that interval,
(i) one between the first and the at least a second unit of content that is reproduced for a period of time exceeding a certain threshold within the respective time interval, or
(ii) the first unit of content.

7. The method according to any one of claims 3 to 6, wherein the method comprises the step of determining that the reproduction information indicates a status of change of the audiovisual content being reproduced when three or more items of content are reproduced within a time interval.

8. The method according to any one of the preceding claims, wherein determining that one or more units of content are reproduced in a time interval comprises detecting the one or more units of content on the basis of at least one between
an input received from a reproduction selection device,
information about the one or more units of content sent by a distribution entity.

9. The method according to any one of the preceding claims, wherein the content indicator comprises an identifier of the unit of audiovisual content in order to identify the unit of content preferably within said group of users.

10. The method according to any one of the preceding claims, wherein the user identifier is an identifier that distinguishes said user from other users comprised in the group of users who share use of a reproduction device.

11. The method according to any one of claims 2 to 10, wherein the neural network has been trained to assign user identifiers on the basis of a sequence of elements indicating information about use, wherein each element of said sequence comprises temporal information and reproduction information that indicate a reproduction status in a time interval indicated by the respective temporal information.

12. The method according to one of the preceding claims, wherein said sequence of elements and/or said reproduction information are agnostic with respect to cognitive aspects of the audiovisual content.

13. A computer program comprising instructions that, when on a computer, ensure that the computer implements any one of the methods of claims 1 to 12.

14. An entity (200) configured to train a neural network to assign an identifier to a user, the user being comprised in a group of users who share use of a device for reproducing audiovisual content, the entity comprising:
- an acquisition unit (210) configured to acquire, for at least said user, a sequence of elements indicating information about use, each element of the sequence comprising temporal information indicating a time interval and reproduction information that refers to a respective time interval, wherein the reproduction information comprises a content indicator indicating that a unit of audiovisual content is reproduced by the device within said respective time interval, wherein said sequence of elements comprises elements referring to successive time intervals;
- generating unit (220) configured to generate a data set comprising said sequence of elements relating to said user and an identifier of said user;
- training unit (230) configured to train the neural network on the basis of said data set.

15. An entity (201) configured to assign an identifier to a user by means of a neural network, the user being comprised in a group of users who share use of a device for reproducing audiovisual content, the entity comprising:
- an acquisition unit (250) configured to acquire, for at least said user, a sequence of elements, each element of the sequence comprising temporal information and respective reproduction information, wherein the temporal information and the respective reproduction information are associated, and wherein the temporal information indicates a time interval and the reproduction information comprises a content indicator indicating that a unit of audiovisual content is reproduced by the device within said respective time interval, wherein said sequence of elements comprises elements referring to successive time intervals;
- a supply unit (560) configured to supply said sequence of elements as input to a neural network, wherein said neural network has been trained to assign known user identifiers to sequences of training elements corresponding to respective users according to the method of claim 1;
- an obtainment unit (270) configured to obtain, as output from said neural network, a user identifier corresponding to said sequence of elements.

## Patentansprüche

1. Verfahren zum Trainieren eines neuronalen Netzwerks, um einem Benutzer eine Kennung zuzuweisen, wobei der Benutzer in einer Gruppe von Benutzern enthalten ist, die die Verwendung einer Vorrichtung zum Wiedergeben audiovisueller Inhalte teilen, wobei das Verfahren die folgenden Schritte umfasst:
- für mindestens den Benutzer, Erfassen (S10) einer Sequenz von Elementen, die Informationen über die Verwendung angeben, wobei jedes Element der Sequenz temporale Informationen, die ein Zeitintervall angeben, und Wiedergabeinformationen umfasst, die sich auf ein entsprechendes Zeitintervall beziehen, wobei die Wiedergabeinformationen einen Inhaltsindikator umfassen, der angibt, dass eine Einheit von audiovisuellen Inhalten von der Vorrichtung innerhalb des entsprechenden Zeitintervalls wiedergegeben wird, wobei die Sequenz von Elementen Elemente umfasst, die sich auf aufeinanderfolgende Zeitintervalle beziehen;
- Erzeugen (S20) eines Datensatzes, der die Sequenz von Elementen, die den Benutzer betreffen, und eine Kennung des Benutzers umfasst;
- Trainieren (S30) des neuronalen Netzwerks auf der Grundlage des Datensatzes.

2. Verfahren zum Zuweisen einer Kennung an einen Benutzer mittels eines neuronalen Netzwerks, wobei der Benutzer in einer Gruppe von Benutzern umfasst ist, die eine Verwendung einer Vorrichtung zum Wiedergeben audiovisueller Inhalte teilen, wobei das Verfahren die folgenden Schritte umfasst:
- für mindestens den Benutzer, Erfassen (S50) einer Sequenz von Elementen, wobei jedes Element der Sequenz temporale Informationen und entsprechende Wiedergabeinformationen umfasst, wobei die temporalen Informationen und die entsprechenden Wiedergabeinformationen assoziiert sind, und wobei die temporalen Informationen ein Zeitintervall angeben und die Wiedergabeinformationen einen Inhaltsindikator umfassen, der angibt, dass eine Einheit von audiovisuellen Inhalten von der Vorrichtung innerhalb des entsprechenden Zeitintervalls wiedergegeben wird, wobei die Sequenz von Elementen Elemente umfasst, die sich auf aufeinanderfolgende Zeitintervalle beziehen;
- Bereitstellen (S60) der Sequenz von Elementen als Eingabe für ein neuronales Netzwerk, wobei das neuronale Netzwerk trainiert worden ist, um bekannte Benutzerkennungen Sequenzen von Trainingselementen zuzuweisen, die nach dem Verfahren nach Anspruch 1 den entsprechenden Benutzern entsprechen;
- Erhalten (S70), als Ausgabe des neuronalen Netzwerks, einer Benutzerkennung, die der Sequenz von Elementen entspricht.

3. Verfahren nach Anspruch 1 oder 2, wobei die Wiedergabeinformationen einen Inhaltsänderungsindikator umfassen, der einen Status der Änderung der audiovisuellen Inhalte angibt, der für das Zeitintervall wiedergegeben wird.

4. Verfahren nach Anspruch 3, wobei der Status der Änderung der wiedergegebenen audiovisuellen Inhalte im Falle der Wiedergabe von linearen Kanälen mittels der Wiedergabevorrichtung einen Status der Änderung des Kanals umfasst, der angibt, dass sich die Wiedergabe von einem initialen Kanal, der zu Beginn des Zeitintervalls wiedergegeben wird, zu einem oder mehreren Kanälen, die nach dem initialen Kanal wiedergegeben werden, geändert hat.

5. Verfahren nach Anspruch 3 oder 4, wobei der Status der Änderung der wiedergegebenen audiovisuellen Inhalte im Falle der Wiedergabe von on-demand audiovisuellen Inhalten eine Änderung der Wiedergabe von einem ersten Gegenstand der on-demand audiovisuellen Inhalte, der zu Beginn des Zeitintervalls wiedergegeben wird, zu einem oder mehreren Gegenständen der on-demand audiovisuellen Inhalte, die nach dem ersten Gegenstand der audiovisuellen Inhalte wiedergegeben werden, angibt.

6. Verfahren nach einem der vorstehenden Ansprüche, wobei, wenn bestimmt wird, dass die Vorrichtung in einem Zeitintervall eine erste Einheit von Inhalten und mindestens eine zweite Einheit von Inhalten nach der ersten Einheit von Inhalten wiedergibt, das Verfahren einen Schritt des Bestimmens umfasst, dass die Wiedergabeinformationen als die Einheit von Inhalten, die in diesem Intervall wiedergegeben wird, Folgendes angeben,
(i) eine zwischen der ersten und mindestens einer zweiten Einheit von Inhalten, die für eine Zeitdauer wiedergegeben wird, die einen bestimmten Schwellenwert innerhalb des entsprechenden Zeitintervalls überschreitet, oder
(ii) die erste Einheit von Inhalten.

7. Verfahren nach einem der Ansprüche 3 bis 6, wobei das Verfahren den Schritt des Bestimmens umfasst, dass die Wiedergabeinformationen einen Status der Änderung der wiedergegebenen audiovisuellen Inhalte angeben, wenn drei oder mehr Gegenstände von Inhalt innerhalb eines Zeitintervalls wiedergegeben werden.

8. Verfahren nach einem der vorstehenden Ansprüche, wobei Bestimmen, dass eine oder mehrere Einheiten von Inhalten in einem Zeitintervall wiedergegeben werden, Detektieren der einen oder mehreren Einheiten von Inhalten auf der Grundlage von mindestens einem zwischen
einer von einer Wiedergabeauswahlvorrichtung empfangenen Eingabe,
Informationen über die eine oder mehrere Einheiten von Inhalten, die von einer Verteilungsentität gesendet wurden, umfasst.

9. Verfahren nach einem der vorstehenden Ansprüche, wobei der Inhaltsindikator eine Kennung der Einheit von den audiovisuellen Inhalten umfasst, um die Einheit von Inhalten vorzugsweise innerhalb der Gruppe von Benutzern zu identifizieren.

10. Verfahren nach einem der vorstehenden Ansprüche, wobei die Benutzerkennung eine Kennung ist, die den Benutzer von anderen Benutzern unterscheidet, die in der Gruppe von Benutzern enthalten sind, die Verwendung einer Wiedergabevorrichtung teilen.

11. Verfahren nach einem der Ansprüche 2 bis 10, wobei das neuronale Netzwerk trainiert worden ist, Benutzerkennungen auf der Grundlage einer Sequenz von Elementen zuzuweisen, die Informationen über die Verwendung angeben, wobei jedes Element der Sequenz temporale Informationen und Wiedergabeinformationen umfasst, die einen Wiedergabestatus in einem durch die entsprechenden temporalen Informationen angegebenen Zeitintervall angeben.

12. Verfahren nach einem der vorstehenden Ansprüche, wobei die Sequenz von Elementen und/oder die Wiedergabeinformationen in Bezug auf kognitive Aspekte der audiovisuellen Inhalte agnostisch sind.

13. Computerprogramm, umfassend Anweisungen, die, wenn sie auf einem Computer sind, sicherstellen, dass der Computer eines der Verfahren der Ansprüche 1 bis 12 implementiert.

14. Entität (200), die ausgebildet ist, um ein neuronales Netzwerk zu trainieren, um einem Benutzer eine Kennung zuzuweisen, wobei der Benutzer in einer Gruppe von Benutzern enthalten ist, die Verwendung einer Vorrichtung zum Wiedergeben von audiovisuellen Inhalten teilen, wobei die Entität Folgendes umfasst:
- eine Erfassungseinheit (210), die ausgebildet ist, um mindestens für den Benutzer eine Sequenz von Elementen zu erfassen, die Informationen über die Verwendung angeben, wobei jedes Element der Sequenz temporale Informationen, die ein Zeitintervall angeben, und Wiedergabeinformationen umfasst, die sich auf ein entsprechendes Zeitintervall beziehen, wobei die Wiedergabeinformationen einen Inhaltsindikator umfassen, der angibt, dass eine Einheit von audiovisuellen Inhalten von der Vorrichtung innerhalb des entsprechenden Zeitintervalls wiedergegeben wird, wobei die Sequenz von Elementen Elemente umfasst, die sich auf aufeinanderfolgende Zeitintervalle beziehen;
- Erzeugungseinheit (220), die ausgebildet ist, um einen Datensatz zu erzeugen, der die Sequenz von Elementen, die den Benutzer betreffen, und eine Kennung des Benutzers umfasst;
- Trainingseinheit (230), die ausgebildet ist, um das neuronale Netzwerk auf der Grundlage des Datensatzes zu trainieren.

15. Entität (201), die ausgebildet ist, um einem Benutzer mittels eines neuronalen Netzwerks eine Kennung zuzuweisen, wobei der Benutzer in einer Gruppe von Benutzern enthalten ist, die eine Verwendung einer Vorrichtung zum Wiedergeben von audiovisuellen Inhalten teilen, wobei die Entität Folgendes umfasst:
- eine Erfassungseinheit (250), die ausgebildet ist, um mindestens für den Benutzer eine Sequenz von Elementen zu erfassen, wobei jedes Element der Sequenz temporale Informationen und entsprechende Wiedergabeinformationen umfasst, wobei die temporalen Informationen und die entsprechenden Wiedergabeinformationen assoziiert sind, und wobei die temporalen Informationen ein Zeitintervall angeben und die Wiedergabeinformationen einen Inhaltsindikator umfassen, der angibt, dass eine Einheit von audiovisuellen Inhalten von der Vorrichtung innerhalb des entsprechenden Zeitintervalls wiedergegeben wird, wobei die Sequenz von Elementen Elemente umfasst, die sich auf aufeinanderfolgende Zeitintervalle beziehen;
- eine Liefereinheit (560), die ausgebildet ist, um die Sequenz von Elementen als Eingabe für ein neuronales Netzwerk zu liefern, wobei das neuronale Netzwerk trainiert worden ist, um bekannte Benutzerkennungen Sequenzen von Trainingselementen zuzuweisen, die entsprechenden Benutzern nach dem Verfahren nach Anspruch 1 entsprechen;
- eine Erfassungseinheit (270), die ausgebildet ist, um als Ausgabe von dem neuronalen Netzwerk eine Benutzerkennung zu erhalten, die der Sequenz von Elementen entspricht.

## Revendications

1. Procédé pour entraîner un réseau neuronal à attribuer un identifiant à un utilisateur, l'utilisateur étant compris dans un groupe d'utilisateurs qui partagent une utilisation d'un dispositif de reproduction de contenu audiovisuel, le procédé comprenant les étapes de :
- pour au moins ledit utilisateur, l'acquisition (S10) d'une séquence d'éléments indiquant des informations concernant l'utilisation, chaque élément de la séquence comprenant des informations temporelles indiquant un intervalle de temps et des informations de reproduction qui se réfèrent à un intervalle de temps respectif, dans lequel les informations de reproduction comprennent un indicateur de contenu indiquant qu'une unité de contenu audiovisuel est reproduite par le dispositif dans ledit intervalle de temps respectif, dans lequel ladite séquence d'éléments comprend des éléments se référant à des intervalles de temps successifs ;
- la génération (S20) d'un ensemble de données comprenant ladite séquence d'éléments relatifs audit utilisateur et un identifiant dudit utilisateur ;
- l'entraînement (S30) du réseau neuronal sur la base dudit ensemble de données.

2. Procédé d'attribution d'un identifiant à un utilisateur au moyen d'un réseau neuronal, l'utilisateur étant compris dans un groupe d'utilisateurs qui partagent une utilisation d'un dispositif de reproduction de contenu audiovisuel, le procédé comprenant les étapes de :
- pour au moins ledit utilisateur, l'acquisition (S50) d'une séquence d'éléments, chaque élément de la séquence comprenant des informations temporelles et des informations de reproduction respectives, dans lequel les informations temporelles et les informations de reproduction respectives sont associées, et dans lequel les informations temporelles indiquent un intervalle de temps et les informations de reproduction comprennent un indicateur de contenu indiquant qu'une unité de contenu audiovisuel est reproduite par le dispositif dans ledit intervalle de temps respectif, dans lequel ladite séquence d'éléments comprend des éléments se référant à des intervalles de temps successifs ;
- la fourniture (S60) de ladite séquence d'éléments en tant qu'entrée d'un réseau neuronal, dans lequel ledit réseau neuronal a été entraîné à attribuer des identifiants utilisateur connus à des séquences d'éléments d'entraînement correspondant à des utilisateurs respectifs selon le procédé de la revendication 1 ;
- l'obtention (S70), en tant que sortie dudit réseau neuronal, d'un identifiant utilisateur correspondant à ladite séquence d'éléments.

3. Procédé selon la revendication 1 ou la revendication 2, dans lequel les informations de reproduction comprennent un indicateur de changement de contenu indiquant un état de changement du contenu audiovisuel en cours de reproduction pendant ledit intervalle de temps.

4. Procédé selon la revendication 3, dans lequel l'état de changement du contenu audiovisuel en cours de reproduction comprend, dans le cas de reproduction de canaux linéaires au moyen du dispositif de reproduction, un état de changement de canal, indiquant que la reproduction a changé en passant d'un canal initial en cours de reproduction au début de l'intervalle de temps à un ou plusieurs canaux reproduits après le canal initial.

5. Procédé selon la revendication 3 ou la revendication 4, dans lequel l'état de changement du contenu audiovisuel en cours de reproduction indique, en cas de reproduction de contenu audiovisuel à la demande, un changement de reproduction en passant d'un premier sujet de contenu audiovisuel à la demande reproduit au début de l'intervalle de temps à un ou plusieurs sujets de contenu audiovisuel à la demande reproduits après ledit premier sujet de contenu audiovisuel à la demande.

6. Procédé selon l'une quelconque des revendications précédentes, dans lequel, lorsqu'il est déterminé que, dans un intervalle de temps, le dispositif reproduit une première unité de contenu et au moins une seconde unité de contenu après la première unité de contenu, le procédé comprend une étape de détermination que les informations de reproduction indiquent, en tant qu'unité de contenu reproduite dans cet intervalle,
(i) l'une entre la première et la au moins une seconde unité de contenu qui est reproduite pendant une période de temps dépassant un certain seuil dans l'intervalle de temps respectif, ou
(ii) la première unité de contenu.

7. Procédé selon l'une quelconque des revendications 3 à 6, dans lequel le procédé comprend l'étape de détermination que les informations de reproduction indiquent un état de changement du contenu audiovisuel en cours de reproduction lorsque trois sujets de contenu ou plus sont reproduits dans un intervalle de temps.

8. Procédé selon l'une quelconque des revendications précédentes, dans lequel la détermination qu'une ou plusieurs unités de contenu sont reproduites dans un intervalle de temps comprend la détection des une ou plusieurs unités de contenu sur la base d'au moins l'une entre
une entrée reçue d'un dispositif de sélection de reproduction,
des informations concernant les une ou plusieurs unités de contenu envoyées par une entité de distribution.

9. Procédé selon l'une quelconque des revendications précédentes, dans lequel l'indicateur de contenu comprend un identifiant de l'unité de contenu audiovisuel afin d'identifier l'unité de contenu de préférence au sein dudit groupe d'utilisateurs.

10. Procédé selon l'une quelconque des revendications précédentes, dans lequel l'identifiant utilisateur est un identifiant qui distingue ledit utilisateur vis-à-vis d'autres utilisateurs compris dans le groupe d'utilisateurs qui partagent une utilisation d'un dispositif de reproduction.

11. Procédé selon l'une quelconque des revendications 2 à 10, dans lequel le réseau neuronal a été entraîné à attribuer des identifiants utilisateur sur la base d'une séquence d'éléments indiquant des informations concernant une utilisation, dans lequel chaque élément de ladite séquence comprend des informations temporelles et des informations de reproduction qui indiquent un état de reproduction dans un intervalle de temps indiqué par les informations temporelles respectives.

12. Procédé selon l'une des revendications précédentes, dans lequel ladite séquence d'éléments et/ou lesdites informations de reproduction sont neutres en ce qui concerne des aspects cognitifs du contenu audiovisuel.

13. Programme informatique comprenant des instructions qui, lorsqu'elles sont sur un ordinateur, assurent que l'ordinateur met en œuvre l'un quelconque des procédés selon les revendications 1 à 12.

14. Entité (200) configurée pour entraîner un réseau neuronal à attribuer un identifiant à un utilisateur, l'utilisateur étant compris dans un groupe d'utilisateurs qui partagent une utilisation d'un dispositif de reproduction de contenu audiovisuel, l'entité comprenant :
- une unité d'acquisition (210) configurée pour acquérir, pour au moins ledit utilisateur, une séquence d'éléments indiquant des informations concernant une utilisation, chaque élément de la séquence comprenant des informations temporelles indiquant un intervalle de temps et des informations de reproduction qui se réfèrent à un intervalle de temps respectif, dans laquelle les informations de reproduction comprennent un indicateur de contenu indiquant qu'une unité de contenu audiovisuel est reproduite par le dispositif dans ledit intervalle de temps respectif, dans laquelle ladite séquence d'éléments comprend des éléments se référant à des intervalles de temps successifs ;
- une unité de génération (220) configurée pour générer un ensemble de données comprenant ladite séquence d'éléments relatifs audit utilisateur et un identifiant dudit utilisateur ;
- une unité d'entraînement (230) configurée pour entraîner le réseau neuronal sur la base dudit ensemble de données.

15. Entité (201) configurée pour attribuer un identifiant à un utilisateur au moyen d'un réseau neuronal, l'utilisateur étant compris dans un groupe d'utilisateurs qui partagent une utilisation d'un dispositif de reproduction de contenu audiovisuel, l'entité comprenant :
- une unité d'acquisition (250) configurée pour acquérir, pour au moins ledit utilisateur, une séquence d'éléments, chaque élément de la séquence comprenant des informations temporelles et des informations de reproduction respectives, dans laquelle les informations temporelles et les informations de reproduction respectives sont associées, et dans laquelle les informations temporelles indiquent un intervalle de temps et les informations de reproduction comprennent un indicateur de contenu indiquant qu'une unité de contenu audiovisuel est reproduite par le dispositif dans ledit intervalle de temps respectif, dans laquelle ladite séquence d'éléments comprend des éléments se référant à des intervalles de temps successifs ;
- une unité d'alimentation (560) configurée pour alimenter ladite séquence d'éléments en tant qu'entrée à un réseau neuronal, dans laquelle ledit réseau neuronal a été entraîné à attribuer des identifiants utilisateur connus à des séquences d'éléments d'entraînement correspondant à des utilisateurs respectifs selon le procédé de la revendication 1 ;
- une unité d'obtention (270) configurée pour obtenir, en tant que sortie dudit réseau neuronal, un identifiant utilisateur correspondant à ladite séquence d'éléments.
